# EUROPÄISCHE PATENTANMELDUNG

(11) **EP 2 309 613 A2**
(43) Veröffentlichungstag der Anmeldung: **13.04.2011**
(21) Anmeldenummer: 10013008.7
(22) Anmeldetag: 01.10.2010
(51) Int. Cl.: H02G 3/04, H02G 3/06

(54) **Inneneck für Kabelkanäle**

(30) Priorität: 09.10.2009 DE 202009013621 U
(71) Anmelder: Tehalit GmbH, 67716 Heltersberg (DE)
(72) Erfinder: Schnurr, Richard, 66957 Vinningen (DE); Mattfeldt, Thiemo, 66484 Winterbach (DE)
(74) Vertreter: Patentanwälte Bitterich, Dr. Keller, Schwertfeger

(57) **Zusammenfassung**

Die Erfindung betrifft ein Inneneck (3) zum Kaschieren einer Lücke zwischen zwei etwa im rechten Winkel stumpf anstoßenden Kabelkanalabschnitten (1, 2), wobei das Inneneck (3) eine Deckwand (4) sowie eine von der Deckwand (4) abgewinkelte obere Seitenwand (5) umfasst, wobei an der Innenfläche (6, 7) der Deckwand (4) und/oder der oberen Seitenwand (5) Rastelemente (8) vorgesehen sind, die mit Gegenrastelementen (9) an den Seitenwänden (10) eines vom Inneneck (3) abgedeckten Kabelkanalabschnitts (1) kooperieren. An der Innenfläche (6) der Deckwand (4) sind Stützrippen (11 a, 11 b, 11 c) zur beabstandeten Abstützung auf dem Unterteil (12) des abgedeckten Kabelkanalabschnitts (1) angeformt. Die Deckwand (4) ist mit einer Aussparung (13) zur Ausführung des etwa im rechten Winkel anstoßenden weiteren Kabelkanalabschnitts (2) versehen.

## Beschreibung

Die Erfindung betrifft ein Inneneck zum Kaschieren der Lücke zwischen zwei etwa im rechten Winkel stumpf anstoßenden Kabelkanalabschnitten sowie einen mit einem solchen Inneneck ausgerüsteten Kabelkanal.

Kabelkanäle werden zum Führen und Verbergen von Strom- und/oder Steuerkabeln verwendet, die entlang der Wände eines Gebäudes verlegt werden. In den meisten Fällen sind die Kabelkanäle nach der Verlegung noch sichtbar, weshalb man sich darum bemüht, sie in einem für den Raum angemessenen, attraktiven Design herzustellen.

Ein Kabelkanalsystem für die Wand oder Sockelleiste wird aus geraden Kabelkanalabschnitten gebildet, die an Ecken des Gebäudes mit Eckverbindungselementen verbunden sind. Diese Eckverbindungselemente sind üblicherweise starre Winkelstücke, die normalerweise so ausgebildet sind, dass sie die geraden Kabelkanalabschnitte unter einem rechten Winkel entweder an einer inneren oder äußeren Gebäudeecke verbinden. Durch diese starren Winkelstücke werden nicht nur die im Inneren der Kabelkanäle angeordneten Kabel im Eckbereich weiterhin überdeckt, sondern es werden gleichzeitig auch die ästhetisch oft als störend empfundenen Schnittkanten der in der Gebäudeecke rechtwinklig stumpf aneinander stoßenden Kabelkanalabschnitte kaschiert, d. h. durch Abdecken unsichtbar gemacht.

Solche starren Winkelstücke zur Eckverbindung von Kabelkanälen sind seit langem hinlänglich bekannt (vergleiche z. B. DE 21 18 058 A, DE 74 20 794 U oder DE 31 31 636 A1) und gehören demzufolge als zumeist im Spritzguss gefertigte Teile zum Standardproduktsortiment jedes Kabelkanalherstellers. Diese bekannten Winkelstücke weisen gattungsgemäß zwei rechtwinklig zueinander ausgerichtete Schenkel auf, die in ihrem Querschnitt jeweils entsprechend den Kabelkanaloberteilen gestaltet sind und demzufolge auf die Unterteile der über Eck zu verbindenden Kabelkanalabschnitte aufgerastet werden. Um zu einem optisch sauberen Übergang zwischen den Kabelkanalabschnitten und dem aufgerasteten Winkelstück zu gelangen, müssen daher die Kabelkanalabschnitte, insbesondere die Kanaloberteile, in ihrer Länge exakt auf die Länge der Schenkel des Winkelstücks abgestimmt sein. Dieser an die Winkelstücke angepasste exakte Zuschnitt der Kabelkanalabschnitte im Eckbereich muss vom Elektroinstallateur auf der Montagebaustelle in zeitraubender Handarbeit durchgeführt werden. Dies ist unbefriedigend.

Es ist somit die Aufgabe der vorliegenden Erfindung, ein Inneneck zum Kaschieren der Lücke zwischen zwei etwa im rechten Winkel stumpf anstoßenden Kabelkanalabschnitten zu schaffen, welches schnell und einfach montierbar ist und zudem zur Kaschierung von Kabelkanälen in Gebäuden geeignet ist.

Diese Aufgabe wird durch ein Inneneck mit den kennzeichnenden Merkmalen des Anspruchs 1 gelöst. Vorteilhafte Ausführungsformen finden sich in den Unteransprüchen wieder.

Das erfindungsgemäße Inneneck basiert auf der verblüffend einfachen Überlegung, eine Verrastung des Innenecks nur noch mit einem Kabelkanalabschnitt vorzusehen. Auf diese Weise kann das Inneneck mit nur einer Deckwand und einer oberen Seitenwand, z. B. aus Kunststoff, einstückig spritzgegossen sein. Dieses Inneneck wird dann so auf einen Kabelkanalabschnitt aufgerastet, dass seine Deckwand eine Abdeckung für das Kabelkanalunterteil bildet. Um auch den Endbereich des anstoßenden Kabelkanalabschnitts in der Raumecke kaschieren zu können, ist in der Deckwand des Innenecks eine Aussparung freigelassen, durch die hindurch das Ende dieses weiteren Kabelkanalabschnitts eingeführt werden kann. Indem auf eine beidseitige (d. h. auf beiden über Eck anstoßenden Kabelkanalabschnitten) Fixierung des Innenecks verzichtet wird, wird außerdem der Vorteil erzielt, dass die Kabelkanalabschnitte nicht exakt rechtwinklig zueinander stehen müssen, was ohnehin häufig in der Montagepraxis angesichts leicht schief zulaufender Wände oder aufgebrachten Putzarbeiten nicht eingehalten werden kann. Der durch die Aussparung eingeführte Kabelkanalabschnitt kann, insbesondere wenn die Aussparung am Umfangsrand der Deckwand halb offen ausgebildet ist, in seinem Eintrittswinkel durch die Aussparung gegenüber dem etwa im rechten Winkel versetzten, anstoßenden Kabelkanalabschnitt horizontal ausgerichtet werden, ohne dass hierdurch optische Einbußen hingenommen werden müssen.

Neben diesem Winkelversatz beim Verlegen von Kabelkanälen über Eck werden auch größere Spalte der im Gebäudeeck aneinanderstoßenden Kabelkanalabschnitte durch das erfindungsgemäße Inneneck so kaschiert, dass die Kaschierung der Schnittenden für das Auge nicht sichtbar ist. Zu diesem Zweck weist die Deckwand an ihrer zum abgedeckten Kabelkanalabschnitt gewandten Innenseite Stützrippen auf, die sich auf dem Kanalunterteil derart abstützen, dass ein freier Spalt zwischen dem Kanalunterteil und der Innenseite des Innenecks verbleibt. In diesen freien Spalt wird der Endbereich des Kanaloberteils eingeführt, so dass auch das unschöne Schnittende des Kanaloberteils durch das Inneneck kaschiert werden kann. Ein unterschiedlich langes Kanaloberteil kann dadurch bis zum Schnittende in dem Spalt ausgeglichen werden, wobei die Maximallänge zur Einführung des Kanaloberteils erst durch dessen Anschlag an der ersten Stützrippe der Inneneckdeckwand erreicht ist.

Ein Vorteil des erfindungsgemäßen Innenecks ist dessen Möglichkeit, einen Winkelversatz von zwei aufeinanderstoßenden Kabelkanalabschnitten auszugleichen, ohne dass hierfür ein über das Eck ausgebildeter Schenkel erforderlich ist. Ein weiterer Vorteil ist dessen Kaschierfunktion und einfache Montierbarkeit.

Die Erfindung sowie weitere vorteilhafte Ausgestaltungen gemäß Merkmalen der Unteransprüche werden anhand der folgenden Zeichnungen näher erläutert; darin zeigen:
- Fig. 1: eine perspektivische Rückansicht auf das erfindungsgemäße Inneneck;
- Fig. 2: eine perspektivische Vorderansicht auf das erfindungsgemäße Inneneck, das die Enden zweier rechtwinklig aneinanderstoßender Kabelkanalabschnitte kaschiert;
- Fig. 3: einen horizontalen Schnitt der in der Fig. 2 gezeigten Verbindungsanordnung.

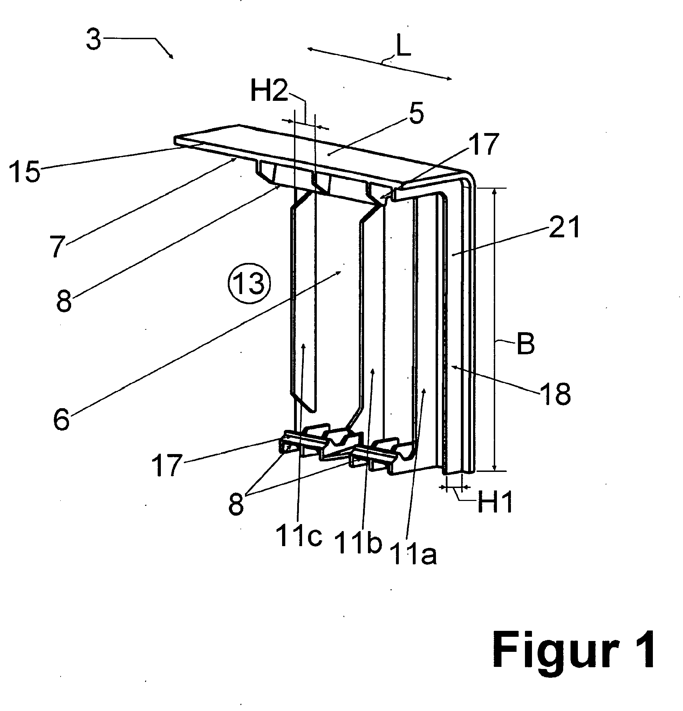

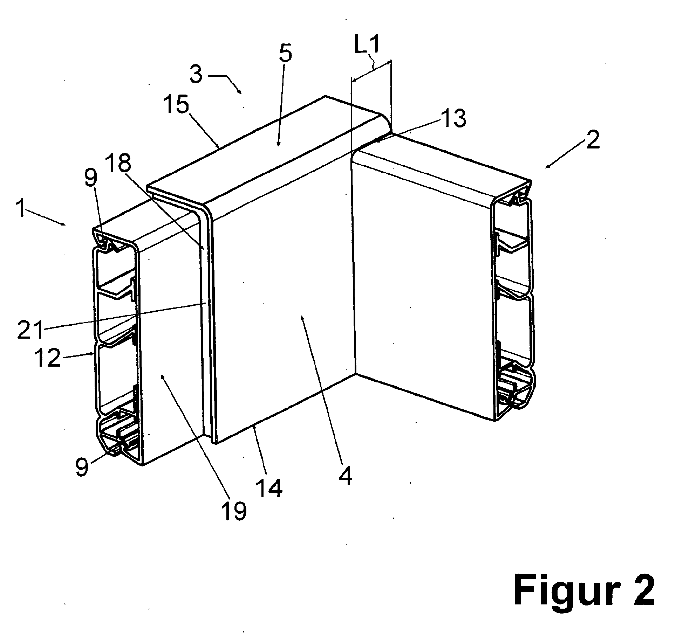

Fig. 1 zeigt eine perspektivische Einzelansicht eines erfindungsgemäßen Innenecks 3, das aus einem L-förmigen Grundkörper mit einer Deckwand 4 und mit einer von dieser Deckwand 4 rechtwinklig abgebogenen, oberen Seitenwand 5 besteht. In Fig. 1 ist das Inneneck 3 in einer Ansicht auf dessen Rückseite dargestellt, die im späteren Einbauzustand (vergl. Fig. 2) unsichtbar ist, da sie zum vom Inneneck 3 überdeckten Kabelkanalabschnitt 1 gewandt ist. Bei dieser Rückansicht ist zu erkennen, dass das Inneneck 3 an der Innenfläche 6 der Deckwand 4 und der Seitenwand 5 jeweils als nasenförmige Vorsprünge 17 ausgebildete Rastelemente 8 aufweist, die bündig entlang der freien Längskanten 14, 15 der Deckwand 4 bzw. der oberen Seitenwand 5 angeordnet sind, und die im späteren Einbauzustand (vergl. Fig. 2) in an der Außenseite der Seitenwände des abgedeckten Kabelkanalunterteils 12 vorgesehene Vertiefungen 9 einrasten.

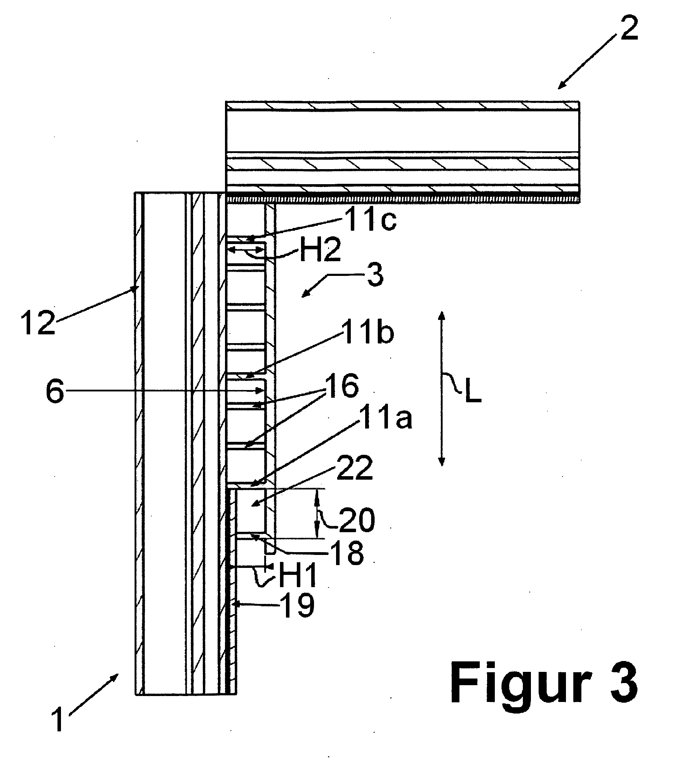

Außerdem ist zu erkennen, dass senkrecht zur Längsersteckung L des Innenecks 3 drei gleichmäßig voneinander beabstandete Stützrippen 11a, 11b, 11c an der Innenseite 6 der Deckwand 4 angeformt sind, deren Funktion besonders deutlich anhand der Schnittdarstellung der Fig. 3 erläutert werden kann. Beim vorgeschilderten Aufrasten des Innenecks 3 auf den Kabelkanalabschnitt 1 stoßen diese drei Stützrippen 11a, 11b, 11c am Kanalunterteil 12 an und gewährleisten so, dass zwischen Inneneck 3 und Kanalunterteil 12 ein freier Spalt 22 verbleibt. Um entlang des gesamten L-Querschnitts des Innenecks 3 eine stabile Abstützung und somit einen stabilen Abstand zum Kanalunterteil 12 zu gewährleisten, ist eine Stützrippe 11a winkelförmig bis zur Innenfläche 7 der oberen Seitenwand 5 verlängert. In dem auf diese Weise zwischen Kanalunterteil 12 und Inneneck 3 entstandenen Spalt 22 wird der Endbereich des Kanaloberteils 19 gemäß Fig. 3 mit dessen unschönem Schnittende versteckt innerhalb einer Strecke 20 eingeschoben sein, wobei die Längsposition des Schnittendes und somit die Länge des Kanaloberteils 19 innerhalb dieser Strecke 20 variieren kann und dabei dennoch vom Inneneck 3 verdeckt bleibt.

Durch die Stützrippen 11a, 11b, 11c ist, was besonders aus Fig. 2 deutlich wird, ein vertikaler Versatz zwischen der Deck- und Seitenwand 4, 5 des Innenecks 3 und den benachbarten Wänden des Kanaloberteils 19 geschaffen worden. Zur Überbrückung und Abdichtung dieses Vertikalversatzes schließt das Inneneck 3 an seinem im Einbauzustand von der Gebäudeecke abgewandten Längsende innenseitig mit einer zusätzlichen Kaschierleiste 18 ab, die passgenau oder mit leichtem Spiel für die Montage an der Oberfläche des bis unter das Inneneck 3 reichenden Kanaloberteils 19 anliegt. Aus diesem Grunde ist die senkrecht zur Deckwandinnenfläche 6 gemessene Höhe H1 der Kaschierleiste 18 kleiner als die entsprechende Höhe H2 der Stützrippen 11a, 11b, 11c. Diese Höhendifferenz H1 - H2 ist dabei mindestens so groß wie die Wandstärke des eingeführten Kabelkanaloberteils 19.

Um zusätzlich einen optisch vorteilhaften Verschönerungseffekt zu erreichen, kann die Kaschierleiste 18 auf ihrer dem direkt angrenzenden Längsende des Innenecks 3 zugewandten, von außen sichtbaren Seite mit einer spiegelnden Oberfläche 21 versehen sein, was beispielsweise durch eine aufkaschierte Metallfolie oder durch einen auflackierten hochglänzenden Decklack realisiert werden kann.

Um nicht nur die Schnittenden des vom Inneneck 3 abgedeckten und mit ihm verrasteten Kabelkanalabschnitts 1, sondern auch die Schnittenden des rechtwinklig anstoßenden weiteren Kabelkanalabschnitts 2 sowie die im Eckbereich von einem Kabelkanalabschnitt 1 in den anderen Kabelkanalabschnitt 2 überführten Leitungen zu kaschieren, ragt das Inneneck 3 in einem Längserstreckungsbereich L1 (vergl. Fig. 2) über das Längsende des abgedeckten Kabelkanalabschnitts 1 hinaus. In diesem in Längsrichtung über den abgedeckten Kabelkanalabschnitt 1 vorstehenden Längsabschnitt L1 des Innenecks 3 ist eine rechteckige Aussparung 13 in der Deckwand 4 vorgesehen, die sich über die gesamte Länge L1 des vorstehenden Inneneckabschnitts und von der freien Längskante 14 des Innenecks über die gesamte senkrecht zur Längserstreckung L des Innenecks 3 gemessene Breite B (vergl. Fig. 1) erstreckt. Im über den abgedeckten Kabelkanalabschnitt 1 in Längsrichtung L vorstehenden Abschnitt L1 des Innenecks 3 bleibt somit vom Inneneck 3 nur noch die obere Seitenwand 2 erhalten. Infolgedessen kann der weitere Kanalkanalabschnitt 2 mit seinem Ende, ohne mit dem Inneneck 3 eine feste Verbindung eingehen zu müssen, senkrecht durch die randseitige Aussparung 13 des Innenecks 3 unter die obere Seitenwand durchgesteckt werden, so dass sowohl das unschöne Schnittende dieses weiteren Kabelkanalabschnitts 2 als auch die im Eckbereich übertretenden Kabelleitungen für den Betrachter allein durch die Abdeckung mit der vorstehenden oberen Seitenwand 2 des Innenecks 3 unsichtbar verborgen bleiben.

## Patentansprüche

1. Inneneck (3) zum Kaschieren einer Lücke zwischen zwei etwa im rechten Winkel stumpf anstoßenden Kabelkanalabschnitten (1, 2), wobei das Inneneck (3) eine Deckwand (4) sowie eine von der Deckwand (4) abgewinkelte obere Seitenwand (5) umfasst, wobei an der Innenfläche (6, 7) der Deckwand (4) und/oder der oberen Seitenwand (5) Rastelemente (8) vorgesehen sind, die mit Gegenrastelementen (9) an den Seitenwänden (10) eines vom Inneneck (3) abgedeckten Kabelkanalabschnitts (1) kooperieren, **dadurch gekennzeichnet, dass** an der Innenfläche (6) der Deckwand (4) Stützrippen (11a, 11b, 11c) zur beabstandeten Abstützung auf dem Unterteil (12) des abgedeckten Kabelkanalabschnitts (1) angeformt sind, und dass die Deckwand (4) mit einer Aussparung (13) zur Einführung des etwa im rechten Winkel anstoßenden weiteren Kabelkanalabschnitts (2) versehen ist.

2. Inneneck nach Anspruch 1, **dadurch gekennzeichnet, dass** die Stützrippen (11a, 11b, 11c) senkrecht zur Längserstreckung (L) des Innenecks (3) verlaufen.

3. Inneneck nach einem der Ansprüche 1 oder 2, **dadurch gekennzeichnet, dass** mindestens eine Stützrippe (11a) zusätzlich an der Innenfläche (7) der oberen Seitenwand (5) vorgesehen ist.

4. Inneneck nach Anspruch 3, **dadurch gekennzeichnet, dass** mindestens eine an der Deckwandinnenfläche (6) ausgebildete Stützrippe (11a) sich winkelförmig bis zum Rand der Innenfläche (7) der oberen Seitenwand (5) verlängert.

5. Inneneck nach einem der Ansprüche 1 bis 4, **dadurch gekennzeichnet, dass** die Stützrippen (11a, 11b) an der Deckwand- bzw. Seitenwandinnenfläche (6, 7) verkürzt sind.

6. Inneneck nach einem der Ansprüche 1 bis 5, **dadurch gekennzeichnet, dass** die Rastelemente (8) bündig entlang der freien Längskante (14, 15) der Deckwand (4) und/oder der oberen Seitenwand (5) angeordnet sind.

7. Inneneck nach einem der Ansprüche 1 bis 6, **dadurch gekennzeichnet, dass** die Rastelemente (8) zumindest teilweise an den Stützrippen (11a), vorzugsweise im Bereich der zu den freien Längskanten (14) des Innenecks (3) gewandten Stützrippenenden, ausgebildet sind.

8. Inneneck nach einem der Ansprüche 1 bis 7, **dadurch gekennzeichnet, dass** die Rastelemente (8) aus von der Deck- bzw. der oberen Seitenwand (4, 5) oder von den Stützrippen (11) senkrecht abzweigenden Stegen (16) und aus an den Stegenden angeformten, jeweils nach innen gerichteten, nasenförmigen Vorsprüngen (17) gebildet sind.

9. Inneneck nach einem der Ansprüche 1 bis 8, **dadurch gekennzeichnet, dass** die Aussparung (13) an einem Längsende der Deckwand (4) eingebracht ist, wodurch die Aussparung (13) nach zwei Seiten offen ausgebildet ist.

10. Inneneck nach einem der Ansprüche 1 bis 9, **dadurch gekennzeichnet, dass** an dem von der Aussparung (13) abgewandten Längsende des Innenecks (3) zusätzlich eine Kaschierleiste (18) vorgesehen ist.

11. Inneneck nach Anspruch 10, **dadurch gekennzeichnet, dass** sich die Kaschierleiste (18) quer zur Längserstreckung (L) des Innenecks (3) winkelförmig entlang der gesamten Innenseite (6, 7) des Innenecks (3) erstreckt und mit einem Abstand vom Rand nach innen versetzt ist.

12. Inneneck nach Anspruch 10 oder 11, **dadurch gekennzeichnet, dass** die senkrecht zur Deckwand- bzw. Seitenwandinnenfläche (6, 7) gemessene Höhe (H1) der Kaschierleiste (18) kleiner ist als die entsprechende Höhe (H2) der Stützrippen (11a, 11b, 11c).

13. Inneneck nach einem der Ansprüche 10 bis 12, **dadurch gekennzeichnet, dass** sich die Kaschierleiste (18) von oben auf das eingeführte Kanaloberteil (19) abstützt und das Kanaloberteilende mit einem Abstand (20) maximal bis zur äußersten Stützrippe (11a) anstößt.

14. Inneneck nach einem der Ansprüche 1 bis 13, **dadurch gekennzeichnet, dass** die Kaschierleiste (18) auf ihrer Außenseite mit einer spiegelnden Oberfläche (21) versehen ist.

15. Kabelkanal, **dadurch gekennzeichnet, dass** er mit wenigstens einem Inneneck (3) nach einem der Ansprüche 1 bis 14 ausgerüstet ist.
